# EUROPEAN PATENT APPLICATION

(11) **EP 4 345 206 A1**
(43) Date of publication of application: **03.04.2024**
(21) Application number: 22859765.4
(22) Date of filing: 07.01.2022
(51) Int. Cl.: D06F 39/12, D06F 37/20

(54) **BASE DEVICE AND CLOTHING TREATMENT APPARATUS**

(30) Priority: 27.08.2021 CN 202110996750
(71) Applicant: Wuxi Little Swan Electric Co., Ltd., Wuxi, Jiangsu 214028 (CN)
(72) Inventor: ZHANG, Tao, Wuxi, Jiangsu 214028 (CN); LI, Yadong, Wuxi, Jiangsu 214028 (CN)
(74) Representative: RGTH
(86) International application number: PCT/CN2022/070812
(87) International publication number: WO 2023/024403

(57) **Abstract**

Provided are a base device and a clothing treatment apparatus. The base device includes a base (2), a first foot, and a leveling mechanism (1). The leveling mechanism (1) and each of first feet jointly bear the base (2). The leveling mechanism (1) includes two second feet (12) and a cross beam (11) connected to the two second feet (12). The cross beam (11) is inclinable relative to a horizontal plane to adjust a support height of each of the two second feet (12) during the leveling. For the clothing treatment apparatus, automatic leveling of the clothing treatment apparatus is achieved through the leveling mechanism with no need for human intervention in the leveling.

## Description

### CROSS-REFERENCE TO RELATED APPLICATIONS

This application is based on and claims priority to Chinese Patent Application No. 202110996750.9 filed on August 27, 2021, the entire disclosure of which is incorporated herein by reference.

### FIELD

The present disclosure relates to the technical field of leveling, and more particularly, to a base device and a clothing treatment apparatus.

### BACKGROUND

As an example, for a washing machine, a vibration noise problem of the washing machine has always been a concern for manufacturers and users alike. Whether a machine's foot is leveled is crucial for vibration of the whole machine. If the feet of the washing machine are not leveled, it is extremely easy to cause a series of problems for the whole machine, such as excessive vibration noise, displacement or walking of the washing machine and dropping of items resting on the washing machine that are caused by great vibration amplitude. At present, the washing machine needs to be leveled manually after installation, which is difficult, time-consuming, and prone to occurrence of uneven leveling.

### SUMMARY

In view of this, embodiments of the present disclosure expect to provide a base device capable of automatically leveling and a clothing treatment apparatus.

The embodiments of the present disclosure provide a base device. The base device comprises a base, at least a first foot disposed at a bottom of the base, and a leveling mechanism disposed at the bottom of the base. The leveling mechanism and each of the at least one first foot jointly bear the base. The leveling mechanism comprises two second feet and a cross beam connected to the two second feet. The cross beam is inclinable relative to a horizontal plane to adjust a support height of each of the two second feet during the leveling.

According to an example of the present disclosure, the base has an accommodation cavity, the accommodation cavity has an opening at a bottom of the accommodation cavity; and the leveling mechanism is capable of being placed in the accommodation cavity through the opening of the accommodation cavity.

According to an example of the present disclosure, the base device comprises a limit member detachably connected to the base and constraining the cross beam in the accommodation cavity.

According to an example of the present disclosure, the base has an engagement groove formed at each of two opposite sides of the base in a direction perpendicular to a length direction of the cross beam; and the limit member at least has two hooks engaged into the engagement groove. The limit member is at least partially located below the cross beam.

According to an example of the present disclosure, the leveling mechanism bears the base through each of the two second feet, and the cross beam bears no weight of the base.

According to an example of the present disclosure, the leveling mechanism provides at least two support points for the base. A position of each of the at least two support points changes synchronously during the leveling.

According to an example of the present disclosure, the cross beam is rotatably connected to the base. The cross beam swings around a rotational connection between the cross beam and the base and drives each of the two second feet to move during the leveling.

According to an example of the present disclosure, the leveling mechanism only provides one support point for the base. The support point is located at the rotational connection between the cross beam and the base.

According to an example of the present disclosure, the two second feet is provided with a support protrusion at a circumferential surface of the second foot; and the base has a first raised portion and a second raised portion that protrude from a side wall surface of the accommodation cavity. The first raised portion and the second raised portion are disposed in a length direction of the cross beam. The first raised portion has a first guide surface inclined downwards. The second raised portion has a second guide surface inclined downwards. A normal line of the first guide surface and a normal line of the second guide surface intersect each other above the base. A support protrusion of one of the two second feet is slidably engaged with the first guide surface, and a support protrusion of another one of the two second feet is slidably engaged with the second guide surface.

According to an example of the present disclosure, each of two opposite sides of the two second feet in a direction perpendicular to the length direction of the cross beam is provided with the support protrusion; and each of side wall surfaces of the accommodation cavity at two opposite sides in the direction perpendicular to the length direction of the cross beam is provided with the first raised portion and the second raised portion.

According to an example of the present disclosure, the first raised portion and the second raised portion are at least integrally formed with a structure of the base located around the accommodation cavity.

The embodiments of the present disclosure provide a clothing treatment apparatus, comprising: the base device according to any embodiment of the present disclosure; a housing component having an open bottom and covering the base; and a tub assembly disposed in the housing component.

As an example, the base device is applied in the clothing treatment apparatus. When the clothing treatment apparatus is placed on flat ground, the two second feet have the same support height and bear substantially uniform force. When the clothing treatment apparatus is placed on uneven ground, the base transmits an acting force to the leveling mechanism. In this case, the one of the two second feet touches the ground first, and the other one of the two second feet has not yet touched the ground. Under the action of the acting force transmitted by the base and a reaction force from the ground, the one of the second feet that touches the ground first forces the leveling mechanism as a whole to slide relative to the base. As a result, the cross beam is gradually inclined. During the inclination of the cross beam, a height of a connection position where the cross beam is connected to the second foot changes. A support height of the second foot that touches the ground first gradually decreases. The cross beam forces the second foot that has not yet touched the ground to move downwards gradually, i.e., the second foot that has not yet touched the ground has a support height gradually increasing until it touches the ground. At this time, each of the two second feet touches the ground and bears basically consistent forces. In this way, the clothing treatment apparatus is in a leveling state and is automatically adapted to uneven ground.

With the clothing treatment apparatus according to the embodiments of the present disclosure, automatic leveling of the clothing treatment apparatus is realized through the leveling mechanism without requiring any manual intervention in the leveling. Once the automatic leveling is completed, even if the clothing treatment apparatus generates vibrations, no vertically relative movement occurs between the base and each second foot, which can effectively lower vibration amplitude and vibration noises of the clothing treatment apparatus. In addition, after leveling, the second foot and the base do not need to be manually locked, which lowers operational requirements for users and after-sales personnel.

### BRIEF DESCRIPTION OF THE DRAWINGS

FIG. 1 is a schematic view of a structure of a base device according to an embodiment of the present disclosure.
FIG. 2 is a schematic exploded view of the structure illustrated in FIG. 1 from another viewing angle.
FIG. 3 is a partially enlarged schematic view at A in FIG. 2.
FIG. 4 is a partially enlarged schematic view at B in FIG. 2.
FIG. 5 is a schematic view of the structure illustrated in FIG. 2 after assembly from another viewing angle.
FIG. 6 is a cross-sectional view in a C-C direction of FIG. 5.
FIG. 7 is a cross-sectional view in a D-D direction of FIG. 5 and a schematic view after clockwise rotation of 90° on a paper surface of FIG. 7.
FIG. 8 is a partially enlarged schematic view at E in FIG. 7.
FIG. 9 is a cross-sectional view in an F-F direction of FIG. 5 and a schematic exploded view after rotation of 180° on a paper surface of FIG. 9.
FIG. 10 is a schematic leveling view of the structure illustrated in FIG. 9 after assembly.
FIG. 11 is a schematic structural view of a leveling mechanism according to an embodiment of the present disclosure.
FIG. 12 is a schematic structural view of a limit member according to an embodiment of the present disclosure.
FIG. 13 is a schematic structural view of a leveling mechanism according to another embodiment of the present disclosure.

### Description of Reference Signs:

leveling mechanism 1; cross beam 11; shaft hole 11a; second foot 12; support protrusion 12a;
base 2; accommodation cavity 2a; hollow area 2b; support arm 21; first blocking wall 22; second blocking wall 23; engagement groove 2c; first raised portion 241; first guide surface 241a; second raised portion 242; second guide surface 242a;
limit member 3; hook 31.

### DETAILED DESCRIPTION

Implementations of the present disclosure are described in further detail below with reference to the accompanying drawings and embodiments. The following embodiments are provided to illustrate the present disclosure and are not intended to limit the scope of the present disclosure.

In the description of the embodiments of the present disclosure, it should be noted that, the orientation or the position relationship indicated by technical terms such as "over", "below", "left", "right", "vertical", "horizontal", "top", "bottom", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure. In addition, the terms "first", "second", and "third" are only used for descriptive purposes, and cannot be understood as indicating or implying relative importance.

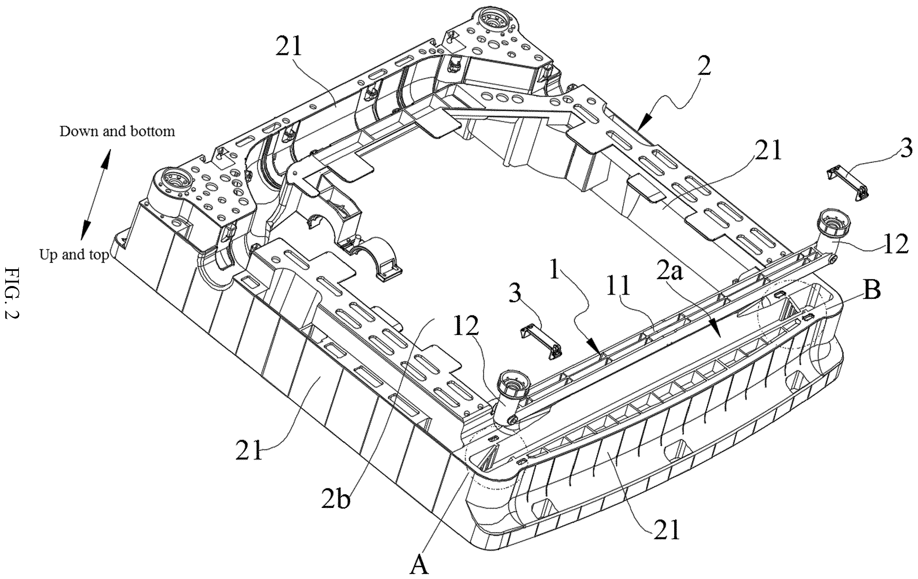

The embodiments of the present disclosure provide a base device. Referring to FIG. 2, the base device comprises a base 2, at least one first foot disposed at a bottom of the base 2, and a leveling mechanism 1 disposed at the bottom of the base 2.

The leveling mechanism 1 and each of the at least one first foot jointly bear the base 2, i.e., both the leveling mechanism 1 and each of the at least one first foot need to bear a weight of the base 2 and a weight of a load acting on the base 2.

It should be noted that each first foot and the leveling mechanism 1 provide at least three support points for the base 2. A stable support plane is defined by various support points collectively to stably support the base 2. It should be noted that the support plane is approximately located in a horizontal plane.

For example, when the leveling mechanism 1 provides one support point for the base 2, a number of first feet is at least two. Moreover, each first foot provides one support point for the base 2. When the leveling mechanism 1 provides two support points for the base 2, a number of the first feet may be one, two, or more.

The support point in the embodiments of the present disclosure refers to a point that may be simplified into a force-bearing support point during mechanical principle calculation, rather than refer in particular to a point from mathematical meaning.

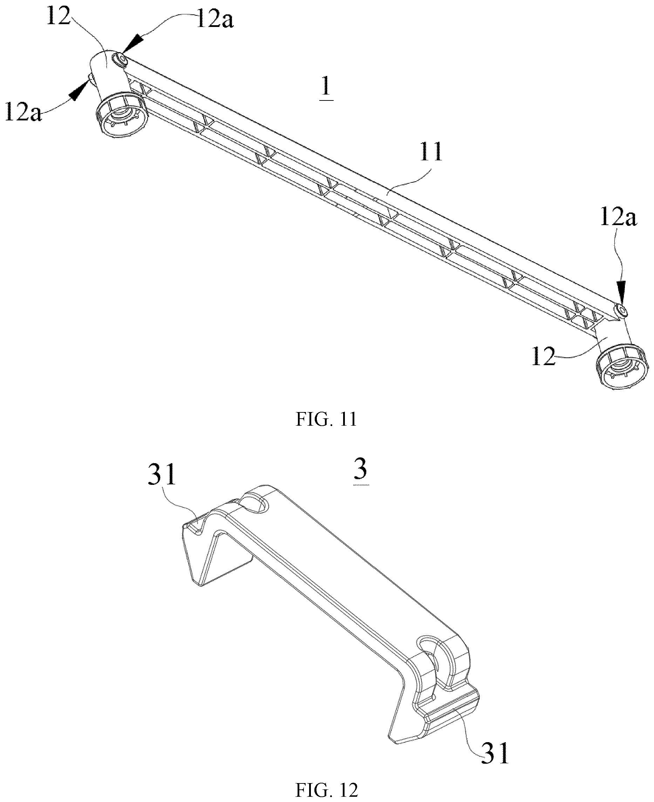

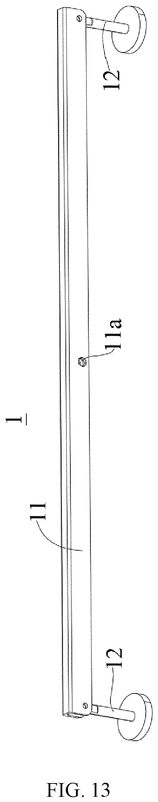

Referring to FIG. 11 and FIG. 13, the leveling mechanism 1 comprises two second feet 12 and a cross beam 11 connected to the two second feet 12, i.e., the two second feet 12 are connected to each other through the cross beam 11. The cross beam 11 is inclinable relative to the horizontal plane to adjust a support height of each of the two second feet 12 during the leveling.

In this embodiment of the present disclosure, the cross beam 11 is a rigid member, i.e., no relative movement occurs between any part of the cross beam 11.

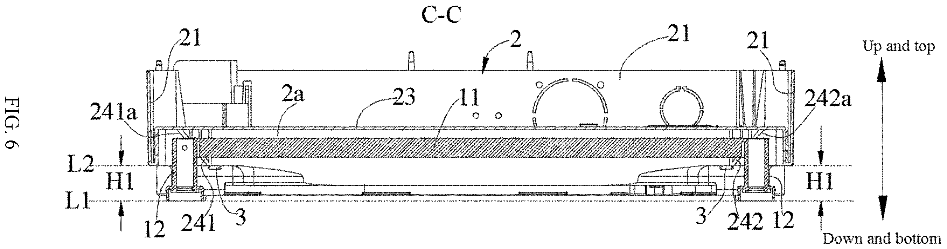

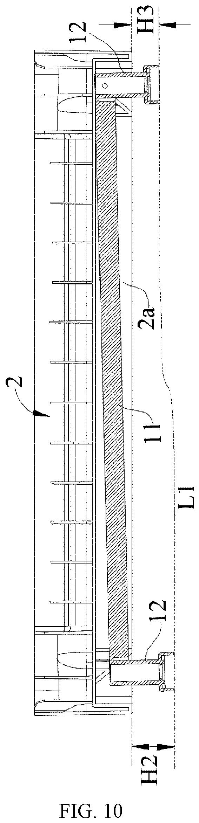

It should be noted that the support height refers to a level difference between a bottommost end of the second foot 12 and a reference horizontal plane at a bottom edge of the base 2. For example, referring to FIG. 6, when the base device is placed on flat ground, a support height of each of the two second feet 12 is H1, where L1 schematically indicates the ground, and L2 indicates the reference horizontal plane at the bottom edge of the base 2. Referring to FIG. 10, when the base device is placed on uneven ground, a support height of the second foot 12 on the right in FIG. 10 is H3, and a support height of the second foot 12 on the left in FIG. 10 is H2.

It should be noted that the above-mentioned reference horizontal plane is merely a schematic example. The reference horizontal plane may also be selected as a horizontal plane passing through a certain determined location on the base 2.

It should be noted that a specific structural shape of the cross beam 11 is not limited. The cross beam 11 may be a straight rod, or a bent cross beam or rod.

The cross beam 11 is inclinable relative to the horizontal plane means that the cross beam 11 is configured to be inclined relative to the horizontal plane with a connection line between connecting points of the two second feet 12, i.e., it is determined that whether the cross beam 11 is inclined by taking the connection line between the two connection points as a reference basis. The connection point refers to a point that may be simplified as a connection point during the mechanical principle calculation rather than refer in particular to a point from mathematical meaning.

An application occasion of the base device is not limited. For example, the base device may be used for household appliances. The base device may be a part of a structure of the household appliance, i.e., the base device constitutes an indispensable part of the household appliance. The base 2 may also be an accessory independent of the household appliance. For example, according to actual needs, the household appliance may be directly placed on the base 2 or taken down from the base 2.

In this embodiment of the present disclosure, as an example, the household appliance is used as a clothing treatment apparatus for description. The base device is used as an indispensable part of a structure of the clothing treatment apparatus.

The embodiments of the present disclosure provide a clothing treatment apparatus. The clothing treatment apparatus comprises a housing component, a tub assembly, and a base device according to any embodiment of the present disclosure. A bottom of the housing component is open and covers the base 2. The tub assembly is disposed in a housing.

In this embodiment, the base 2 bears a weight of the tub assembly, a weight of the housing component, and a weight of all loads of the clothing treatment apparatus. For the base 2, the tub assembly, the housing component, and all loads of the clothing treatment apparatus collectively serve as loads loaded by the base 2.

The clothing treatment apparatus has unlimited specific types and may be a washing machine, a clothes dryer, or a washing-drying integral machine.

The working principle of the leveling mechanism 1 is described below.

When the clothing treatment apparatus is placed on flat ground, referring to FIG. 6, the cross beam 11 is located in the horizontal plane, i.e., the cross beam 11 is not inclined. The two second feet 12 have the same support height, which is H1, and bear substantially uniform force.

As illustrated in FIG. 10, when the clothing treatment apparatus is placed on uneven ground, the base 2 transmits an acting force to the leveling mechanism 1. In this case, one of the two second feet 12 touches the ground first, and the other of the two second feet 12 has not yet touched the ground. For example, a second foot 12 on the right in FIG. 10 touches the ground first. Under the action of the acting force transmitted by the base 2 and a reaction force from the ground, a second foot 12 that touches the ground first forces the leveling mechanism 1 as a whole to slide relative to the base 2. As a result, the cross beam is gradually inclined. During the inclination of the cross beam 11, a height of a connection position where the cross beam 11 is connected to the second foot 12 changes. A support height of the second foot 12 that touches the ground first gradually decreases. The cross beam 11 forces the second foot 12 that has not yet touched the ground to move downwards gradually, i.e., the second foot 12 that has not yet touched the ground has a support height gradually increasing until it touches the ground. At this time, the two second feet 12 both touch the ground, have a leveled state illustrated in FIG. 10, and bear basically consistent forces. In this way, the clothing treatment apparatus is in a leveling state and is automatically adapted to uneven ground.

With the clothing treatment apparatus according to the embodiments of the present disclosure, automatic leveling of the clothing treatment apparatus is realized through the leveling mechanism without requiring any manual intervention in the leveling.

In the related art, a spring is disposed on the foot. The clothing treatment apparatus is automatically leveled through deformation of the spring. However, during vibration of the clothing treatment apparatus, a relative movement occurs between the machine body and the foot. On one hand, the spring easily causes resonance in the machine body, intensifying vibration amplitude of the clothing treatment apparatus. On the other hand, during the vibration, the machine body can move downwards relative to the foot, leading to great vibration amplitude of the machine body.

With the base device according to the embodiments of the present disclosure, once the automatic leveling is completed, even if the clothing treatment apparatus generates vibrations, no vertically relative movement occurs between the base 2 and each second foot 12, which can effectively lower vibration amplitude and vibration noise of the clothing treatment apparatus. In addition, after leveling, the second foot 12 and the base 2 do not need to be manually locked, which lowers operational requirements for users and after-sales personnel.

It should be noted that the first foot may be a fixed foot, a foot having a telescopic spring, or the like. In an embodiment in which provided is a plurality of first feet, the plurality of first feet may be independent from each other and do not interfere with each other; or the at least two first feet are linked to form the leveling mechanism 1 of the embodiments of the present disclosure, i.e., the base device is at least configured with two leveling mechanisms 1 of the embodiments of the present disclosure.

A manner of a connection between the cross beam 11 and each second foot 12 is not limited. For example, in some embodiments, the cross beam 11 is hinged to each second foot 12. In this way, after the cross beam 11 is in an inclined state, each second foot 12 is still in a vertical support state.

In some other embodiments, the cross beam 11 is fixedly connected to the second foot 12. The fixed connection between the cross beam 11 and the second foot 12 refers to a manner of a connection allowing for no relative movement between the cross beam 11 and the second foot 12, for example, welding, snapping, riveting, bolt connection, or the like.

Exemplarily, referring to FIG. 2, FIG. 3, and FIG. 4, the base 2 has an accommodation cavity 2a. The accommodation cavity 2a extends generally in a length direction of the cross beam 11. The accommodation cavity 2a has an opening at a bottom thereof. Referring to FIG. 6 and FIG. 10, the leveling mechanism 1 is placed in the accommodation cavity 2a through the opening of the accommodation cavity 2a, i.e., the cross beam 11 is located in the accommodation cavity 2a.

During assembly, the cross beam 11 and the two second feet 12 can be assembled into a pre-assembled whole, and then the pre-assembled whole is placed into the accommodation cavity 2a through the opening of the accommodation cavity 2a, i.e., during assembly, assembly of the leveling mechanism 1 and the base 2 can be realized without turning over the base 2 for many times at a same operation station.

On the one hand, the accommodation cavity 2a provides the cross beam 11 and the second foot 12 with a mounting space and can also play a predetermined role in protection. On the other hand, the cross beam 11 is prevented from being exposed at an appearance surface of the clothing treatment apparatus. Moreover, other objects are prevented from scratching the cross beam 11. In addition, the cross beam 11 is also prevented from affecting an appearance of the clothing treatment apparatus.

In an embodiment where the base 2 has the accommodation cavity 2a, exemplarily, the cross beam 11 is fixedly connected to the second foot 12. In this way, there is no need to provide a guiding and limiting structure for the second foot 12 on the base 2. It should be noted that in an embodiment where the second foot 12 is hinged to the cross beam 11, the second foot 12 needs to be guided and limited to prevent any deflection of the second foot 12.

Exemplarily, the accommodation cavity 2a is enclosed at all sides except the bottom, i.e., a structure around the accommodation cavity 2a is a continuous structure. On the one hand, structural strength of the base 2 is improved. On the other hand, manufacturing and molding of the base 2 is facilitated.

The base 2 is made of unlimited materials. The base 2 may be made of metal, plastic, or the like.

Exemplarily, the base 2 is integrally formed by injection molding, i.e., the base 2 is made of plastic. In this way, it is beneficial to reduce the cost of the base 2. Moreover, it is convenient to manufacture the base 2 into a complex process shape.

A specific structural shape of the base 2 is not limited.

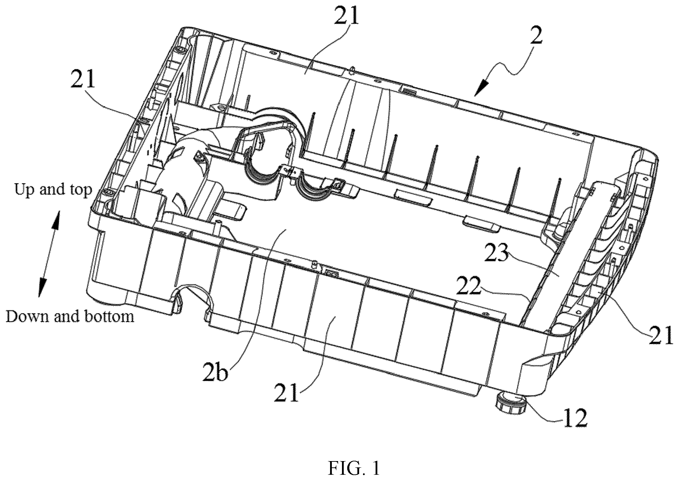

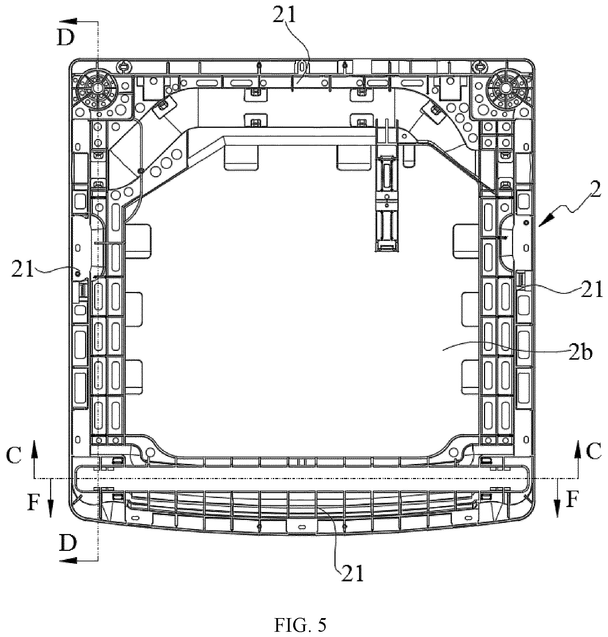

Exemplarily, the base 2 is generally of a frame structure. Referring to FIG. 1, FIG. 2, and FIG. 5, the base 2 comprises a plurality of support arms 21. The plurality of support arms 21 is connected end to end to define a hollow area 2b. Each support arm 21 serves as a structural force-bearing member. In this structural form, the hollow area 2b is beneficial to reducing the material of the base 2 and the weight of the base 2.

Exemplarily, referring to FIG. 1, the base 2 also comprises a first blocking wall 22 and a second blocking wall 23. The first blocking wall 22 is located at a side of one of the support arms 21 facing towards the hollow area 2b. The second blocking wall 23 is located at a top of a space enclosed by the corresponding support arm 21 and the first blocking wall 22. The first blocking wall 22, the second blocking wall 23, and the corresponding support arm 21 collectively define the accommodation cavity 2a. In this embodiment, the first blocking wall 22 and the second blocking wall 23 do not affect an appearance form of the base 2, do not change an appearance size of the base 2 along a periphery of the base 2, and do not affect a height size of the base 2.

It should be noted that the second blocking wall 23 does not exceed a top surface of any one of the support arms 21, thereby avoiding affecting the mounting of the base 2, the housing component, and the tub assembly.

It should be noted that, after the leveling mechanism 1 is placed into the accommodation cavity 2a through the opening at the bottom of the accommodation cavity 2a, it is necessary to ensure that the leveling mechanism 1 is not easy to fall out of the accommodation cavity 2a during assembly, transportation, and the like.

Exemplarily, in some embodiments, an elastic sheet is provided on the base 2. The elastic sheet has an end fixed to the base 2 and another end extending into the opening of the accommodation cavity 2a. During the placement of the cross beam 11 into the accommodation cavity 2a, the cross beam 11 forces the elastic sheet to elastically deform. After the cross beam 11 crosses the elastic sheet, the elastic sheet recovers under the action of its elasticity. In this way, the elastic sheet plays a role in limiting and stopping the cross beam 11, thereby preventing the cross beam 11 from falling out of the opening of the accommodation cavity 2a. It should be noted that after the base is placed on the ground, the elastic sheet does not bear the acting force of the cross beam 11 and is in an unstressed state.

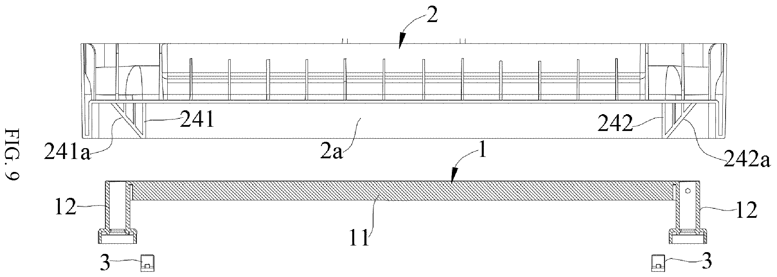

In some other embodiments, referring to FIG. 2, FIG. 6, and FIG. 9, the base device comprises a limit member 3. The limit member 3 is detachably connected to the base 2 and is configured to constrain the cross beam 11 in the accommodation cavity 2a.

Specifically, during assembly, after the leveling mechanism 1 is placed in the accommodation cavity 2a, the limit member 3 is connected to the base 2. In this way, the limit member 3 does not affect the assembly of the leveling mechanism 1. Further, when the leveling mechanism 1 needs to be disassembled, the limit member 3 is detached, and the leveling mechanism 1 is taken out subsequently. In addition, since the limit member 3 does not affect the assembly of the cross beam 11, the limit member 3 may be designed as any desired shape. Therefore, design flexibility of the limit member 3 is improved. Moreover, it is possible to improve limiting reliability of the limit member 3 to the cross beam 11.

A specific structural form of the limit member 3 is not limited, as long as a better limiting effect on the cross beam 11 can be conveniently achieved.

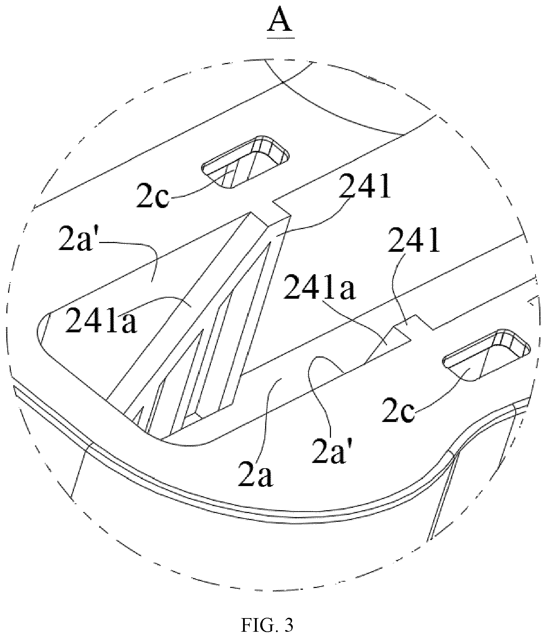

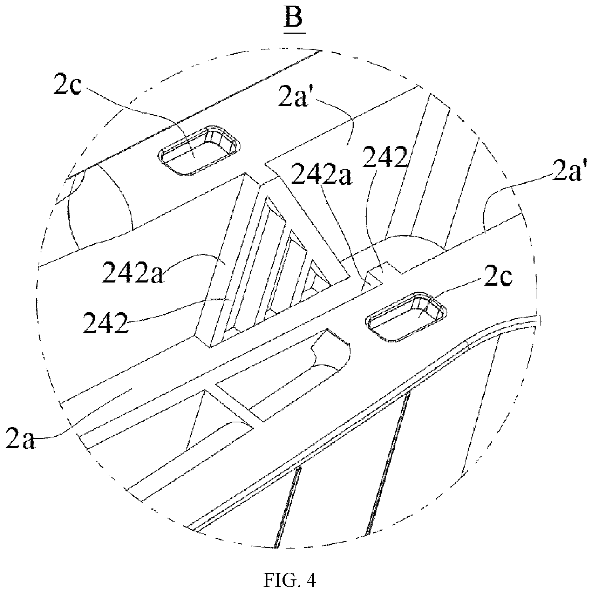

Exemplarily, referring to FIG. 3 and FIG. 4, the beam 2 has an engagement groove 2c formed at each of two opposite sides of the base 2 in a direction perpendicular to the length direction of the cross beam 11, i.e., at least two engagement grooves 2c are provided. Referring to FIG. 12, the limit member 3 at least has two hooks 31. The two hooks 31 are engaged into the engagement groove 2c. The limit member 3 is at least partially located below the cross beam 11.

Specifically, the limit member 3 has a predetermined length. Two opposite ends of the limit member 3 in a length direction of the limit member 3 are each provided with the hook 31. Each hook 31 is engaged into a corresponding engagement groove 2c. Moreover, the limit member 3 bypasses a lower part of the cross beam 11. In this embodiment, assembly processes of the limit member 3 are simple and convenient.

It should be noted that a specific position of the engagement groove 2c is not limited, as long as the engagement of the hook 31 of the limit member 3 is facilitated.

For example, referring to FIG. 3 and FIG. 4, the engagement groove 2c is defined at a bottom end surface of the base 2. During assembly, it is convenient for an operator to directly press the hook 31 inwards into the engagement groove 2c, and even to operate with one hand, which further simplifies the assembling process.

It should be noted that the hook 31 needs to have excellent structural strength. During assembly or transportation, the cross beam 11 abuts against the limit member 3 under the action of its own gravity, and the hook 31 is not easily disengaged from the engagement groove 2c.

A specific construction of the limit member 3 is not limited. For example, in some embodiments, referring to FIG. 12, the limit member 3 is an integrally formed plastic member.

In some other embodiments, the limit member 3 is a separate structure. Specifically, the limit member 3 comprises a flexible member and hooks 31 connected to two ends of the flexible member. The flexible member may be a sheet metal belt, a metal wire harness, a woven belt, a rubber belt, and the like. The hook 31 may be made of plastic, metal, and the like.

In some embodiments, the base 2 may directly abut against the cross beam 11 of the leveling mechanism 1, i.e., the acting force of the base 2 is first transmitted to the cross beam 11, and then transmitted to the second foot 12 through the cross beam 11. For example, the cross beam 11 is rotatably connected to the base. For example, the cross beam 11 is hinged to the base. An adjustment on the support height of each second foot 12 is realized by swinging around the rotational connection through the cross beam 11.

In some other embodiments, the leveling mechanism 1 bears the base 2 through each second foot 12, and the cross beam 11 does not bear the weight of the base 2, i.e., the cross beam 11 basically has tensile stress and basically does not bear a shear force. In this way, it is possible to lower the requirement for structural strength and flexural rigidity of the cross beam 11.

Exemplarily, in some embodiments, the leveling mechanism 1 provides at least two support points for the base 2. For example, each second foot 12 provides a support point for the base 2. The two second feet 12 may provide two support points for the base 2. During the leveling, a position of each support point changes synchronously.

It should be noted that the synchronization in the embodiments of the present disclosure refers to time synchronization, i.e., the position of each support point starts and ends change simultaneously.

Exemplarily, in some other embodiments, the cross beam 11 is rotatably connected to the base 2. During the leveling, the cross beam 11 swings around the rotational connection and drives each second foot 12 to move. In this embodiment, the leveling mechanism 1 only provides one support point for the base 2, and the support point is located at the rotational connection between the cross beam 11 and the base 2. For example, referring to FIG. 13, the cross beam 11 has a shaft hole 11a. A rotary shaft passes through the shaft hole 11a and rotatably connects the cross beam 11 to the base 2, i.e., during the swinging of the cross beam 11, it is possible to adjust the support heights of all the second feet 12 synchronously.

Two embodiments of the present disclosure are described below with reference to the accompanying drawings.

### Embodiment 1

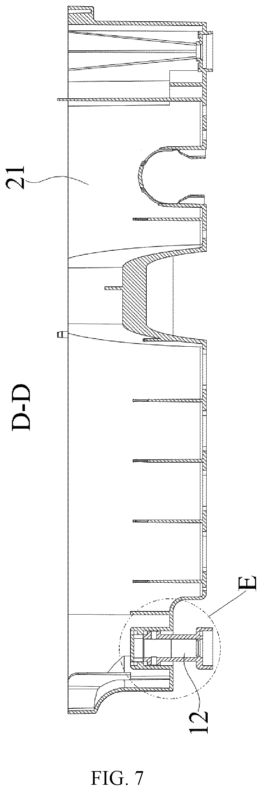

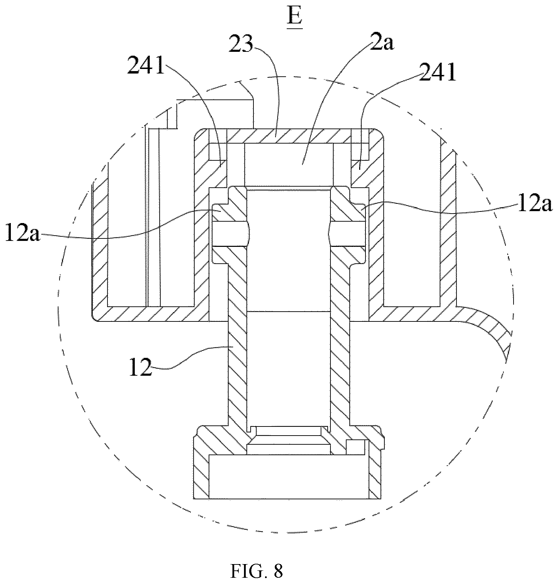

Referring to FIG. 1 to FIG. 11, the leveling mechanism 1 bears the base 2 through each second foot 12, and the cross beam 11 does not bear the weight of the base 2.

The leveling mechanism 1 provides two support points for the base 2. Each second foot 12 provides a support point for the base 2. The cross beam 11 is constrained in the accommodation cavity 2a through the limit member 3.

Exemplarily, referring to FIG. 11, a support protrusion 12a is provided at a circumferential surface of each of the two second feet 12. The base 2 abuts against the support protrusion 12a.

Referring to FIG. 3 and FIG. 4, the base 2 has a first raised portion 241 and a second raised portion 242 that protrude from a side wall surface 2a' of the accommodation cavity 2a. The first raised portion 241 and the second raised portion 242 are disposed in the length direction of the cross beam 11. The base 2 abuts against a support protrusion 12a of the one of the second feet 12 through the first raised portion 241 and abuts against a support protrusion 12a of the other one of the second feet 12 through the second raised portion 242.

Referring to FIG. 3, FIG. 4, FIG. 9, and FIG. 10, the first raised portion 241 has a first guide surface 241a inclined downwards. The second raised portion 242 has a second guide surface 242a inclined downwards. A normal line of the first guide surface 241a and a normal line of the second guide surface 242a intersect each other above the base 2, i.e., the first guide surface 241a and the second guide surface 242a are arranged obliquely facing away from each other roughly.

Referring to FIG. 6 and FIG. 10, the support protrusion 12a of the one of the two second feet 12 is slidably engaged with the first guide surface 241a, and the support protrusion 12a of the other one of the two second feet 12 is slidably engaged with the second guide surface 242a.

It should be noted that both the first raised portion 241 and the second raised portion 242 cannot interfere with the cross beam 11.

It should be noted that, when the support protrusion 12a of the one of the second feet 12 slides obliquely upwards along the first guide surface 241a, the cross beam 11 and the other one of the second feet 12 move synchronously, allowing the support protrusion 12a of the other one of the second feet 12 to slide obliquely downwards along the second guide surface 242a. When the support protrusion 12a of the one of the second feet 12 slides obliquely downwards along the first guide surface 241a, the cross beam 11 and the other one of the second feet 12 move synchronously, allowing the support protrusion 12a of the other one of the second feet 12 to slide obliquely upwards along the second guide surface 242a.

It should be noted that the first guide surface 241a may be a flat and continuous surface, or an abstract surface defined by a plurality of protrusions. The second guide surface 242a may be a flat and continuous surface, or an abstract surface defined by the plurality of protrusions.

Exemplarily, referring to FIG. 11, each of two opposite sides of each of the two second feet 12 in a direction perpendicular to the length direction of the cross beam 11 is provided with the support protrusion 12a. Referring to FIG. 3 and FIG. 4, each of side wall surfaces 2a' of two opposite sides of the accommodation cavity 2a in the direction perpendicular to the length direction of the cross beam 11 is provided with the first raised portion 241 and the second raised portion 242. The cross beam 11 passes between the two first raised portions 241 and between the two second raised portions 242.

In this embodiment, the base 2 evenly acts on the two support protrusions 12a of the one of the second feet 12 through the two first raised portions 241. Moreover, the base 2 evenly acts on the two support protrusions 12a of the other one of the second feet 12 through the two second raised portions 242. In this way, it is possible to improve a force-bearing condition of the leveling mechanism 1 and enhance reliability of the leveling mechanism 1.

It should be noted that the first raised portion 241 may be an independent component and assembled to the base 2. The second raised portion 242 may be an independent component and assembled to the base 2.

Exemplarily, the first raised portion 241 and the second raised portion 242 are at least integrally formed with a structure of the base 2 located around the accommodation cavity 2a. In this way, the assembling process can be reduced. Moreover, it is possible to improve structural reliability of a connection between the first raised portion 241 and the base 2 and structural reliability of a connection between the second raised portion 242 and the base 2.

A specific shape of the first raised portion 241 is not limited. For example, the first raised portion 241 may be in a block shape and a rib shape. A specific shape of the second raised portion 242 is not limited. For example, the second raised portion 242 may be in a block shape and a rib shape.

A specific shape of the support protrusion 12a is not limited. Exemplarily, the support protrusion 12a may be in a cylinder shape. The two support protrusions 12a are coaxial with each other.

The automatic leveling principle of the leveling mechanism 1 in this embodiment of the present disclosure is described below.

When the base device is placed on the flat ground, the cross beam 11 is located in the horizontal plane. Referring to FIG. 6, the support heights of the two second feet 12 are the same, both of which are H1.

When the base device is placed on the uneven ground, referring to FIG. 10, the weight of the base 2 and the weight of the load of the base 2 are transferred to one of the second feet 12 that touches the ground first. The second foot 12 on the right in FIG. 10 touches the ground first. During the leveling, the second foot 12 on the left in FIG. 10 has not yet touched the ground. At this time, under the action of the acting force transmitted by the base 2 and the reaction force from the ground, the one of the second feet 12 on the right side in FIG. 10 slides to the upper right along the second guide surface 142a and forces the cross beam 11 to swing in a counterclockwise direction of FIG. 10 by taking a support protrusion 12a of the right second foot 12 as a swing center. The cross beam 11 gradually inclines. During the inclination of the cross beam 11, the cross beam 11 forces the second foot 12 that has not yet touched the ground to gradually move downwards until the second foot 12 touches the ground. At this time, each of the two second feet 12 touches the ground and basically bears the same force, which allows the clothing treatment apparatus to be in the leveling state and to automatically adapt to the uneven ground.

### Embodiment 2

Referring to FIG. 12, the cross beam 11 is rotatably connected to the base 2. For example, the cross beam 11 is hinged to the base 2. The leveling mechanism 1 only provides one support point for the base 2. The support point is located at the rotational connection between the cross beam 11 and the base 2. During the leveling, the cross beam 11 swings around the rotational connection and drives each second foot 12 to move.

In this embodiment, since the cross beam 11 is rotatably connected to the base 2, the limiting effect has been performed on the cross beam 11 at the rotational connection, which can prevent the cross beam 11 from being disengaged from the base 2. Therefore, the limit member 3 does not need to be provided in this embodiment.

When the base device is placed on the uneven ground, the weight of the base 2 and the weight of the load of the base 2 are transmitted to the one of the second feet 12 that touches the ground first through the cross beam 11. Under the combined action of the acting force of the base 2 and the one of the second feet 12 that touches the ground first, the cross beam 11 adaptively swings with the rotational connection as the swing center. In this way, the other one of the second feet 12 that has not been touched the ground gradually moves downwards until it touches the ground.

In the description of this specification, descriptions with reference to the terms "an embodiment", "some embodiments", "examples", "specific examples", or "some examples" etc. mean that specific features, structure, materials or characteristics described in conjunction with the embodiment or example are comprised in at least one embodiment or example of the embodiments of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, different embodiments or examples and features of different embodiments or examples described in the present disclosure may be combined by those skilled in the art without mutual contradiction.

While preferred embodiments of the present disclosure have been described above, the present disclosure is not limited thereto. For those skilled in the art, various changes and modifications can be made to the present disclosure. Any modification, equivalent replacement, improvement, etc., made within the spirit and principle of the present disclosure shall fall within the scope of the present disclosure.

## Claims

1. A base device, comprising:
a base (2);
at least a first foot disposed at a bottom of the base (2); and
a leveling mechanism (1) disposed at the bottom of the base (2), the leveling mechanism (1) and each of the at least one first foot jointly bearing the base (2), the leveling mechanism (1) comprising two second feet (12) and a cross beam (11) connected to the two second feet (12), and the cross beam (11) being inclinable relative to a horizontal plane to adjust a support height of each of the two second feet (12) during leveling.

2. The base device according to claim 1, wherein:
the base (2) has an accommodation cavity (2a), the accommodation cavity (2a) having an opening at a bottom of the accommodation cavity (2a); and
the leveling mechanism (1) is placed in the accommodation cavity (2a) through the opening of the accommodation cavity (2a).

3. The base device according to claim 2, further comprising a limit member (3) detachably connected to the base (2) and constraining the cross beam (11) in the accommodation cavity (2a).

4. The base device according to claim 3, wherein:
the base (2) has an engagement groove (2c) formed at each of two opposite sides of the base (2) in a direction perpendicular to a length direction of the cross beam (11); and
the limit member (3) at least has two hooks (31) engaged into the engagement groove (2c), the limit member (3) being at least partially located below the cross beam (11).

5. The base device according to any one of claims 1 to 4, wherein the leveling mechanism (1) bears the base (2) through each of the two second feet (12); and
the cross beam (11) bears no weight of the base (2).

6. The base device according to any one of claims 1 to 5, wherein the leveling mechanism (1) provides at least two support points for the base (2), a position of each of the at least two support points changing synchronously during the leveling.

7. The base device according to any one of claims 1 to 6, wherein the cross beam (11) is rotatably connected to the base (2), the cross beam (11) swinging around a rotational connection between the cross beam (11) and the base (2) and driving each of the two second feet (12) to move during the leveling.

8. The base device according to claim 7, wherein the leveling mechanism (1) only provides one support point for the base (2), the support point being located at the rotational connection between the cross beam (11) and the base (2).

9. The base device according to any one of claims 2 to 8, wherein:
the two second feet (12) is provided with a support protrusion (12a) at a circumferential surface of the second foot (12); and
the base (2) has a first raised portion (241) and a second raised portion (242) that protrude from a side wall surface of the accommodation cavity (2a), the first raised portion (241) and the second raised portion (242) being disposed in a length direction of the cross beam (11), the first raised portion (241) having a first guide surface (241a) inclined downwards, the second raised portion (242) having a second guide surface (242a) inclined downwards, and a normal line of the first guide surface (241a) and a normal line of the second guide surface (242a) intersecting each other above the base (2),
wherein a support protrusion (12a) of one of the two second feet (12) is slidably engaged with the first guide surface (241a), and a support protrusion (12a) of another one of the two second feet (12) is slidably engaged with the second guide surface (242a).

10. The base device according to claim 9, wherein:
each of two opposite sides of the two second feet (12) in a direction perpendicular to the length direction of the cross beam (11) is provided with the support protrusion (12a); and
each of side wall surfaces of the accommodation cavity (2a) at two opposite sides of the accommodation cavity in the direction perpendicular to the length direction of the cross beam (11) is provided with the first raised portion (241) and the second raised portion (242).

11. The base device according to claim 9 or 10, wherein the first raised portion (241) and the second raised portion (242) are at least integrally formed with a structure of the base (2) located around the accommodation cavity (2a).

12. A clothing treatment apparatus, comprising:
a base device according to any one of claims 1 to 11;
a housing component having an open bottom and covering the base (2); and
a tub assembly disposed in the housing component.
